(19) Europäisches Patentamt
European Patent Office
Office européen des brevets

(11) **EP 2 997 336 B1**

(12) **EUROPÄISCHE PATENTSCHRIFT**

(45) Veröffentlichungstag und Bekanntmachung des Hinweises auf die Patenterteilung:
**09.06.2021   Patentblatt 2021/23**

(21) Anmeldenummer: **14722134.5**

(22) Anmeldetag: **22.04.2014**

(51) Int Cl.:
*G01S 13/88* (2006.01)          *G01S 7/35* (2006.01)
*G01F 23/00* (2006.01)          *G01F 23/284* (2006.01)
*G01S 13/34* (2006.01)

(86) Internationale Anmeldenummer:
**PCT/EP2014/058090**

(87) Internationale Veröffentlichungsnummer:
**WO 2014/183959 (20.11.2014 Gazette 2014/47)**

(54) **FÜLLSTANDSMESSUNG MIT VERBESSERTER ENTFERNUNGSBESTIMMMUNG**

FILLING LEVEL MEASUREMENT WITH IMPROVED DISTANCE DETERMINATION

MESURE DE NIVEAU À DÉTERMINATION AMÉLIORÉE DE L'ÉLOIGNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2013   DE 102013105019**

(43) Veröffentlichungstag der Anmeldung:
**23.03.2016   Patentblatt 2016/12**

(73) Patentinhaber: **Endress+Hauser SE+Co. KG 79689 Maulburg (DE)**

(72) Erfinder:
• **FABER, Harald**
  **79541 Lörrach (DE)**
• **MAYER, Winfried**
  **89290 Buch (DE)**
• **MALINOVSKIY, Alexey**
  **79689 Maulburg (DE)**

(74) Vertreter: **Andres, Angelika Maria Endress+Hauser Group Services (Deutschland) AG+Co. KG Colmarer Straße 6 79576 Weil am Rhein (DE)**

(56) Entgegenhaltungen:
**US-A1- 2012 146 796**

• **PRAKRUTI V BHATT ET AL: "Non-uniform Spectrum Sensing Using Computationally Efficient 2-level (FFT-Goertzel) Based Energy Detection", COMPUTER AND COMMUNICATION TECHNOLOGY (ICCCT), 2012 THIRD INTERNATIONAL CONFERENCE ON, IEEE, 23. November 2012 (2012-11-23), Seiten 221-226, XP032300193, DOI: 10.1109/ICCCT.2012.52 ISBN: 978-1-4673-3149-4**
• **PRESS W H ET AL: "NUMERICAL RECIPES IN C, CHAPTER 10. MINIMIZATION OR MAXIMIZATION OF FUNCTIONS", NUMERICAL RECIPES IN C: THE ART OF SCIENTIFIC COMPUTING, XX, XX, 1. Januar 1992 (1992-01-01), Seiten 394-402, XP002446687,**
• **ANDREAS HADERER ET AL: "A fixed IF 77-GHz FMCW radar sensor", MICROWAVE CONFERENCE, 2008. APMC 2008. ASIA-PACIFIC, IEEE, PISCATAWAY, NJ, USA, 16 December 2008 (2008-12-16), pages 1-4, XP031457943, ISBN: 978-1-4244-2641-6**

**Beschreibung**

Die Erfindung betrifft ein Verfahren zur Bestimmung von Frequenzkomponenten eines diskreten Zeitsignals gemäß Anspruch 1. Des weiteren betrifft die Erfindung ein Verfahren zur Bestimmung von Entfernungen zu Radarzielen mittels FMCW-Radar gemäß Anspruch 14 sowie ein Entfernungsmessgerät zur Bestimmung der Entfernung von Radarzielen mittels FMCW-Radar gemäß dem Oberbegriff des Anspruchs 15.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress+Hauser hergestellt und vertrieben.

Bei einer Vielzahl von Messanwendungen geht es dazum, ein Zeitsignal in ein zugehöriges Frequenzspektrum umzuwandeln, um die im Frequenzspektrum enthaltenen Frequenzkomponenten bestimmen zu können.

Beispielsweise kann zur Bestimmung des Füllstands in einem Behälter oder einem Tank ein Füllstandsmessgerät verwendet werden, das nach dem Prinzip des FMCW-Radars arbeitet. Dabei wird ein frequenzmoduliertes Radarsendesignal ausgesendet und an der Oberfläche der Flüssigkeit oder des Schüttguts zum Füllstandsmessgerät zurückreflektiert. Als Ergebnis der Messung erhält man ein diskretes Zeitsignal, das eine oder mehrere Frequenzkomponenten enthält. Anhand dieser im diskreten Zeitsignal enthaltenen Frequenzkomponenten lässt sich der Füllstand in dem Behälter oder Tank ableiten. Dabei hängt die Genauigkeit, mit der der Füllstand bestimmt werden kann, von der Genauigkeit ab, mit der die im Zeitsignal enthaltenen Frequenzkomponenten ermittelt werden können.

In dem Konferenzband zur "Third International Conference on Computer and Communication Technology" (IEE, 2012, S. 221- 226) wird durch P. Bhatt et al. ein neuartiges Verfahren zur hochgenauen Bestimmung der Leistung von Peaks eines Frequenzspektrums beschrieben. Das Verfahren beruht auf dem Goertzel-Algorithmus und zeichnet sich dadurch aus, dass in einem zweiten verfeinerten Abtast-Schritt durch Einfügen zusätzlicher Frequenzstützstellen im Bereich der Frequenzpeaks die Leistung in diesem Bereich sehr genau bestimmt werden können. Es dient zur Anwendung in Radio-Empfägern und bietet dort den Vorteil, momentan empfangbare Sendekanäle mit verringertem Rechenaufwand zu erkennen.

Zudem wird in dem Buch "Numerical Recepies in C" von W. Press et al. (1992, XP-002446687, Kapitel 10, S. 402 ff.) ein mathematisches Verfahren von Brent beschrieben, mit dem allgemien Datenpunkte einer Datenreihe interpoliert werden können, wobei aus der interpolierten Funktion lokale Maxima bzw. Minima bestimmt werden können.

In dem Konferenzbeitrag "A fixed IF 77GHz- FMCW radar-sensor" zur "MICROWAVE CONFERENCE, 2008" ASIA-PACIFIC, IEEE, PICATAWAY, NJ, USA (16.12.08), ISBN:978-1-4224-2641-6 wird ein FMCW Radar-basierter Abstandssensor beschrieben, bei dem das Zwischenfrequenz-Signal anstelle einer FFT-Transformation mittels eines FIR-Filters, in dem der Goertzel-Algorithmus implementiert ist, verarbeitet wird

Aufgabe der Erfindung ist es, eine Abstandsmessung mit verbesserter Genauigkeit zu ermöglichen. Gelöst wird diese Aufgabe durch die in den Ansprüchen 1 und 8 angegebenen Merkmale.

Vorteilhafte Weiterentwicklungen der Erfindung sind in den Unteransprüchen angegeben.

Das Verfahren zur Bestimmung von Frequenzkomponenten eines diskreten Zeitsignals entsprechend den Ausführungsformen der vorliegenden Erfindung umfasst das Transformieren des diskreten Zeitsignals in den Frequenzbereich mittels einer schnellen Fourier-Transformation, wobei ein Frequenzspektrum als Folge von Frequenzabtastwerten erhalten wird. Darüber hinaus umfasst das Verfahren das Detektieren von Peaks im Frequenzspektrum, das Einführen von mindestens einer zusätzlichen Frequenzstützstelle in der Umgebung eines detektierten Peaks, das Bestimmen einer Frequenzamplitude an der mindestens einen zusätzlichen Frequenzstützstelle mittels des Goertzel-Algorithmus, und das Bestimmen der Lage des Peakmaximums des detektieren Peaks unter Verwendung sowohl der von der schnellen Fourier-Transformation gelieferten Frequenzabtastwerte als auch der Frequenzamplitude an der mindestens einen zusätzlichen Frequenzstützstelle.

Durch die Einführung von zusätzlichen Frequenzstützstellen in der Umgebung eines detektieren Peaks kann das Frequenzspektrum selektiv in der Umgebung des Peaks weiter unterteilt werden. Der Goertzel-Algorithmus ermöglicht eine Bestimmung der Frequenzamplituden an der mindestens einen zusätzlich eingeführten Frequenzstützstelle mit vergleichsweise geringem Rechenaufwand. Durch die Einführung der zusätzlichen Frequenzstützstellen in der Umgebung des detektierten Peaks wird das Frequenzspektrum selektiv dort verfeinert, wo die erhöhte Frequenzauflösung auch benötigt wird, nämlich in der Umgebung des Peaks. Indem sowohl die von der schnellen Fourier-Transformation gelieferten Frequenzabtastwerte als auch die Frequenzamplituden an den zusätzlich eingeführten Frequenzstützstellen für die Bestimmung des Peakmaximums des detektierten Peaks herangezogen werden, kann die Lage des Peakmaximums mit deutlich höherer Genauigkeit bestimmt werden als bisher.

Insbesondere ermöglicht das Verfahren eine genauere Bestimmung der Lage der Peaks im Frequenzspektrum, ohne dass hierfür die Anzahl der von der schnellen Fourier-Transformation verwendeten Zeitabtastwerte vergrößert werden müsste. Eine Vergrößerung der von der schnellen Fourier-Transformation verwendeten Anzahl an Zeitabtastwerten führt nämlich zu einem deutlichen Anstieg der benötigten Rechenleistung und des Speicherbedarfs. Das vorliegende Verfahren ermöglicht eine genauere Bestimmung der Peakmaxima, ohne dass sich die erforderliche Rechenleistung oder der benötigte Speicher signifikant vergrößert werden müsste.

Dabei ist es insbesondere von Vorteil, wenn das oben beschriebene Verfahren in einem entsprechend dem Prinzip des FMCW-Radars arbeitenden Radarmessgerät zur Bestimmung der Entfernung von Radarzielen verwendet wird.

Insbesondere ist es von Vorteil, wenn das oben beschriebene Verfahren in einem entsprechend dem Prinzip des FMCW-Radars arbeitenden Füllstandsmessgerät zur Bestimmung eines Füllstands in einem Behälter oder einem Tank verwendet wird. Durch die verbesserte Genauigkeit bei der Bestimmung der Frequenzkomponenten kann der Füllstand in einem Behälter oder einem Tank auf diese Weise mit einer Genauigkeit im Submillimeterbereich bestimmt werden.

Das Verfahren zur Bestimmung von Entfernungen zu Radarzielen mittels FMCW-Radar entsprechend den Ausführungsformen der vorliegenden Erfindung umfasst das Aussenden eines frequenzmodulierten Sendesignals, das Empfangen eines an mindestens einem Radarziel reflektierten Empfangssignals, das Heruntermischen des Empfangssignals in einen Zwischenfrequenzbereich und Digitalisieren des erhaltenen Zwischenfrequenzsignals, das Bestimmen der Lage des Peakmaximums von mindestens einer in dem digitalisierten Zwischenfrequenzsignal enthaltenen Frequenzkomponente mittels des oben beschriebenen Verfahrens, sowie das Umrechnen der Lage des Peakmaximums in eine Entfernung des Radarziels.

Ein Entfernungsmessgerät entsprechend den Ausführungsformen der vorliegenden Erfindung dient zur Bestimmung der Entfernung von Radarzielen mittels FMCW-Radar und umfasst eine Sendeeinheit, welche ein Radar-Sendesignal aussendet, eine Empfangseinheit, welche ein an mindestens einem Radarziel reflektiertes Radar-Empfangssignal empfängt, das Radar-Empfangssignal in einen Zwischenfrequenzbereich heruntermischt und das erhaltene Zwischenfrequenzsignal digitalisiert, sowie eine Auswerteeinheit, welche dazu ausgelegt ist, die Lage des Peakmaximums von mindestens einer in dem digitalisierten Zwischenfrequenzsignal enthaltenen Frequenzkomponente mittels des oben beschriebenen Verfahrens zu bestimmen.

Nachfolgend ist die Erfindung anhand mehrerer in der Zeichnung dargestellter Ausführungsbeispiele näher erläutert.

Es zeigen:

Fig. 1A ein Blockschaltbild eines Entfernungssensors nach dem FMCW-Prinzip;
Fig. 1B den zeitlichen Verlauf der Frequenz des Sende- und Empfangssignals;
Fig. 2 einen Füllstandssensor zur Bestimmung des Füllstands in einem Behälter oder einem Tank;
Fig. 3A das digitalisierte Zwischenfrequenzsignal als Funktion der Zeit;
Fig. 3B das zu dem in Fig. 3A gezeigten Zwischenfrequenzsignal gehörige Frequenzspektrum, das mittels einer schnellen Fourier-Transformation bestimmt wurde;
Fig. 4 ein Verfahren zur Bestimmung der im Spektrum enthaltenen Frequenzkomponenten;
Fig. 5 eine Möglichkeit zur weiteren Unterteilung des von der FFT gelieferten Frequenzrasters in der Umgebung eines Peaks durch fortgesetzte Intervallhalbierung;
Fig. 6 das Verfahren von Brent zur Approximation eines Peaks in der Umgebung eines Peakmaximums mit Hilfe von Parabeln; und
Fig. 7 eine grafische Darstellung eines Filters, der entsprechend dem Goertzel-Algorithmus zu einer vorgegebenen Frequenz die zugehörige Frequenzamplitude liefert.

Bei der Entfernungsmessung mittels Radar nach dem FMCW (Frequency-Modulated Continuous Wave)-Prinzip wird ein frequenzmoduliertes Radarsignal im Dauerstrichbetrieb ausgesendet und am jeweiligen Ziel reflektiert. Das reflektierte Signal wird vom Entfernungssensor empfangen und ausgewertet.

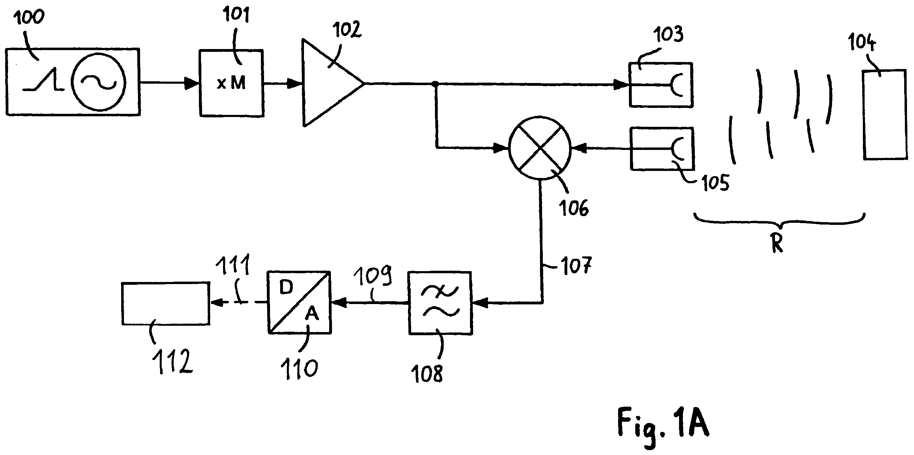

Fig. 1A zeigt ein Blockschaltbild eines Entfernungssensors, der nach dem FMCW-Prinzip arbeitet. Der Sendezweig des Entfernungssensors umfasst einen Signalgenerator 100, der ein frequenzmoduliertes Signal erzeugt. Das vom Signalgenerator 100 erzeugte Signal gelangt über eine Frequenzvervielfachungsstufe 101, in der die Frequenz des Signals entsprechend einem vorgegebenen Faktor vervielfacht wird, zu einem Verstärker 102. Dort wird das Signal verstärkt und anschließend einem Sendetor 103 zugeführt. Über das Sendetor 103 wird das frequenzmodulierte Radar-Sendesignal abgegeben.

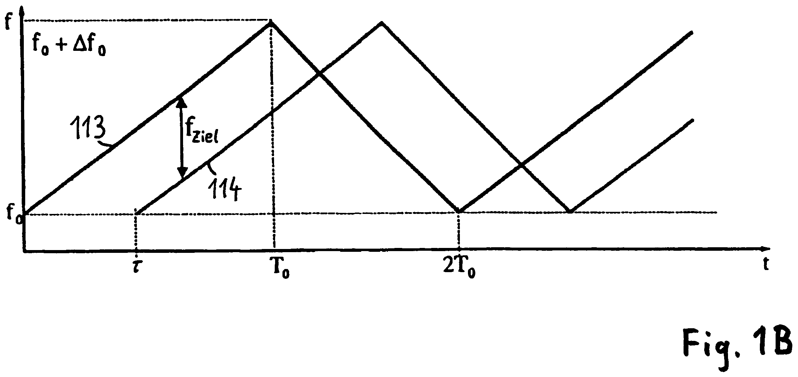

In Fig. 1B ist die Frequenz des erzeugten Sendesignals 113 als Funktion der Zeit dargestellt. Es ist zu erkennen, dass die Frequenz des Sendesignals 113 abwechselnd linear ansteigt und wieder absinkt, so dass sich insgesamt ein dreiecksförmiger Verlauf ergibt. Während einer ersten Modulationsperiodendauer $T_0$ wird die Frequenz des Sendesignals linear von der Frequenz $f_0$ auf die Frequenz $f_0 + \Delta f_0$ erhöht, wobei die Größe $\Delta f_0$ als Frequenzhub bezeichnet wird.

Während einer darauffolgenden zweiten Modulationsperiodendauer $T_0$ wird die Frequenz ausgehend von $f_0 + \Delta f_0$ wieder linear auf $f_0$ zurückgeführt. Alternativ zu dem dreiecksförmigen Verlauf könnte die Frequenz des Sendesignals auch einen sägezahnförmigen Frequenzverlauf aufweisen.

Die Frequenzen von Radar-Sendesignalen bewegen sich beispielsweise im Bereich von etwa 20 GHz bis 100 GHz. Der Frequenzhub $\Delta f_0$ könnte beispielsweise einige GHz betragen. Die Modulationsperiodendauer könnte beispielsweise aus dem Bereich zwischen etwa 0,1 msec und 5 msec gewählt werden. Diese Angaben dienen lediglich zur Illustration typischer Größenordnungen, es sind allerdings auch Lösungen außerhalb dieser Bereiche möglich.

Wie in Fig. 1A gezeigt ist, wird ein Teil des abgestrahlten Sendesignals durch ein im Abstand R vom Entfernungssensor befindliches Ziel 104 zum Entfernungssensor zurückreflektiert. Das reflektierte Signal wird vom Empfangstor 105 des Entfernungssensors empfangen und einem Empfangsmischer 106 zugeführt. Im Empfangsmischer 106 wird das Empfangssignal mit dem momentan ausgesendeten Sendesignal gemischt. Für den Weg vom Sendetor 103 zum Ziel 104 und zurück zum Empfangstor 105 benötigt das Radarsignal eine Laufzeit $\tau$, die sich darstellen lässt als

$$\tau = \frac{2 \cdot R}{c} \qquad\qquad (1)$$

wobei R den Zielabstand und c die Lichtgeschwindigkeit bezeichnet.

In Fig. 1B ist zusätzlich zum Sendesignal 113 auch das um die Laufzeit $\tau$ zeitversetzte Empfangssignal 114 eingezeichnet. Während der vom Radarsignal benötigten Laufzeit $\tau$ steigt das vom Signalgenerator erzeugte Sendesignal 113 weiter an, so dass die Frequenz des momentan abgestrahlten Sendesignals höher ist als die Frequenz des Empfangssignals. Infolge der Laufzeit $\tau$ des Radarsignals ergibt sich daher ein für die Laufzeit $\tau$ und damit für die Entfernung des Ziels charakteristischer Frequenzunterschied zwischen Sende- und Empfangssignal, der als Zielfrequenz $f_{Ziel}$ bezeichnet wird. Die Zielfrequenz $f_{Ziel}$ ist in Fig. 1B ebenfalls eingezeichnet.

Die Zielfrequenz $f_{Ziel}$ lässt sich aus dem Frequenzhub $\Delta f_0$ und der Modulationsperiodendauer $T_0$ des Sendesignals und aus der Laufzeit $\tau$ herleiten. Die Zielfrequenz $f_{Ziel}$ ergibt sich zu

$$f_{Ziel} = \frac{\Delta f_0}{T_0} \cdot \tau = \frac{\Delta f_0}{T_0} \cdot \frac{2 \cdot R}{c} \qquad\qquad (2)$$

Da die Größen $\Delta f_0$, $T_0$, c konstant sind, ergibt sich eine direkte Proportionalität zwischen der Zielfrequenz $f_{Ziel}$ und der zugehörigen Entfernung R. Das vom Empfangsmischer 106 in Fig. 1A erzeugte Mischersignal 107 enthält daher Frequenzkomponenten zu einem oder mehreren Zielen, aus denen sich jeweils die zugehörigen Entfernungen bestimmen lassen.

Das Mischersignal 107 wird durch einen Abtasttiefpass 108 gefiltert, welcher Frequenzkomponenten oberhalb einer Grenzfrequenz unterdrückt. Durch den Abtasttiefpass 108 wird die Bandbreite des Mischersignals 107 vor der Digitalisierung begrenzt. Außerdem wird durch die Grenzfrequenz eine maximale Entfernung $R_{max}$ festgelegt. Das tiefpassgefilterte Zwischenfrequenzsignal 109 wird durch einen Analog-Digital-Wandler 110 abgetastet und digitalisiert. Das so erhaltene digitalisierte Zwischenfrequenzsignal 111 wird der digitalen Signalverarbeitungseinheit 112 zur Auswertung zugeführt, welche die im Zwischenfrequenzsignal enthaltenen Frequenzkomponenten bestimmt. Vorzugsweise führt die digitale Signalverarbeitungseinheit 110 eine Fourier-Transformation (Fast Fourier Transform, FFT) der Abtastwerte durch, wobei aus den Peaks des Fourierspektrums dann unmittelbar die Entfernungen bestimmt werden können.

Entfernungssensoren der in Fig. 1A gezeigten Art können beispielsweise als Füllstandsmessgeräte in der Prozessmesstechnik eingesetzt werden, um den Abstand zu einer Oberfläche einer Flüssigkeit oder eines Schüttguts in einem Behälter zu bestimmen.

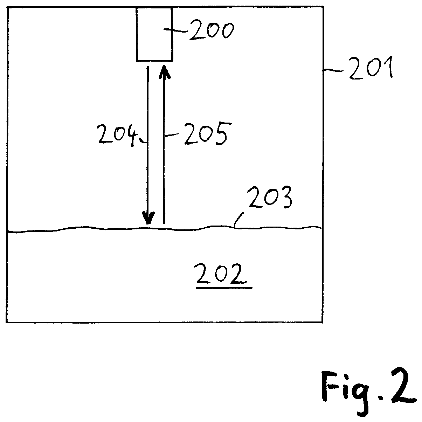

Ein derartiges Füllstandsmessgerät ist in Fig. 2 gezeigt. Das Füllstandsmessgerät 200 wird innerhalb eines Behälters oder eines Tanks 201 montiert, der zum Teil mit einer Flüssigkeit 202 gefüllt ist. Das Füllstandsmessgerät 200 ist dazu ausgelegt, mittels FMCW-Radar die Entfernung zur Flüssigkeitsoberfläche 203 zu messen. Hierzu sendet das Füllstandsmessgerät 200 ein frequenzmoduliertes Sendesignal 204 im Dauerstrichbetrieb in Richtung der Flüssigkeitsoberfläche 203. Das Radarsignal wird an der Flüssigkeitsoberfläche 203 reflektiert, und das zurückreflektierte Signal 205 wird vom Füllstandsmessgerät 200 empfangen und ausgewertet. Aus der Zielfrequenzkomponente $f_{Ziel}$ im Zwischenfrequenzsignal kann das Füllstandsmessgerät 200 dann die Entfernung zur Flüssigkeitsoberfläche 203 sowie den Füllstand im Behälter oder Tank 201 bestimmen. Derartige Füllstandsmessgeräte werden beispielsweise in Öltanks eingesetzt, um den Füllstand des Öls möglichst exakt zu bestimmen.

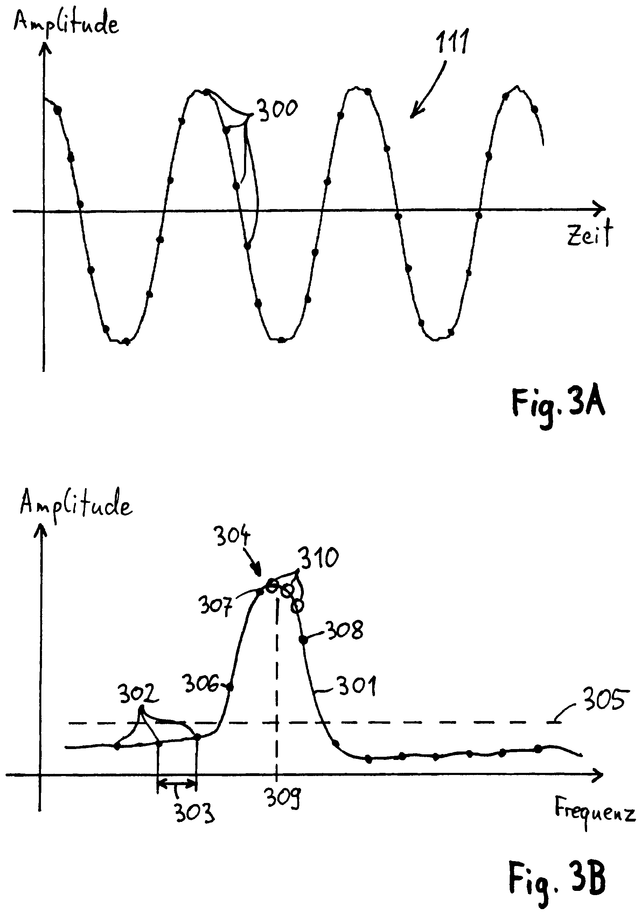

In Fig. 3A ist das digitalisierte Zwischenfrequenzsignal 111 als Funktion der Zeit aufgetragen. Das digitalisierte Zwischenfrequenzsignal 111 besteht aus einer Zeitreihe von Abtastwerten 300. Diese Zeitreihe von Abtastwerten 300 wird erzeugt, indem das tiefpassgefilterte Zwischenfrequenzsignal 109 vom Analog-/Digital-Wandler 110 mit einer vorgegebenen Abtastrate digitalisiert wird. Das digitalisierte Zwischenfrequenzsignal 111 wird der Signalverarbeitungseinheit 112 zur weiteren Auswertung zugeführt. Auf Seiten der Signalverarbeitungseinheit 112 wird das Zwischenfrequenzsignal 111 mittels einer schnellen Fourier-Transformation (FFT, Fast Fourier Transform) aus dem Zeitbereich in den Frequenzbereich transformiert. Auf diese Weise können die im Zwischenfrequenzsignal enthaltenen Frequenzkomponenten analysiert werden.

Eine schnelle Fourier-Transformation (FFT, Fast Fourier Transform) ist ein Algorithmus zur effizienten Berechnung der Werte einer diskreten Fourier-Transformation (DFT, Discrete Fourier Transform). Bei der Diskreten Fourier-Transformation werden die zeitlichen Abtastwerte $x_j$ ($j = 0,1, ... n-1$) eines Signals in Frequenzabtastwerte $f_k$ ($k = 0,1, ... n-1$) im Frequenzbereich umgewandelt:

$$f_k = \sum_{j=0}^{N-1} e^{-2\pi i \frac{jk}{N}} \cdot x_j \qquad\qquad (3)$$

Diese Summe soll nun mit Hilfe einer schnellen Fourier-Transformation (FFT, Fast Fourier Transform) berechnet werden. Eine schnelle Fourier-Transformation ist ein Berechnungsverfahren, mit dem das Ergebnis einer diskreten Fourier-Transformation auf besonders schnelle und effiziente Weise berechnet werden kann.

Vor der Durchführung der schnellen Fourier-Transformation wird der Mittelwert der zur Abtastzeitreihe gehörenden Abtastwerte ermittelt, und von den Abtastwerten abgezogen. Durch einen derartigen Mittelwertabzug wird ein eventueller Gleichanteil der Abtastwerte eliminiert.

Eine Voraussetzung für die Anwendung eines FFT-Algorithmus ist, dass die Anzahl N der zeitlichen Abtastwerte eine Zweierpotenz ist. Die Anzahl N von Abtastwerten kann also dargestellt werden als $N=2^n$, wobei n eine natürliche Zahl ist. Dies stellt im Allgemeinen keine schwerwiegende Einschränkung dar, da die Zahl der Abtastwerte in der Zeitreihe im Allgemeinen frei gewählt werden kann. Im Fall der in den Fig. 1 und 2 gezeigten FMCW-Messung können beispielsweise $2^{12} = 4096$ Abtastwerte des Zwischenfrequenzsignals als Ausgangspunkt für eine schnelle Fourier-Transformation verwendet werden. Dies kann beispielsweise durch die Auswahl eines geeigneten zeitlichen Fensters des Zwischenfrequenzsignals erreicht werden, also durch eine sogenannte "Fensterung".

Die Grundidee der schnellen Fourier-Transformation (FFT) ist, die Berechnung einer DFT der Größe 2n zunächst in zwei Berechnungen der Größe n aufzuteilen. Dies kann beispielsweise geschehen, indem der Vektor mit den 2·n Abtastwerten in einen ersten Vektor der Abtastwerte mit geradem Index und in einen zweiten Vektor der Abtastwerte mit ungeradem Index aufgeteilt wird. Die beiden Teilergebnisse dieser beiden diskreten Fourier-Transformationen der Größe n werden nach der Transformation wieder zu einer Fourier-Transformation der Größe 2·n zusammengefügt. Auf diese Weise kann die schnelle Fourier-Transformation auf zuvor berechnete Zwischenergebnisse zurückgreifen und auf diese Weise arithmetische Rechenoperationen einsparen.

Eine vorteilhafte Möglichkeit zur Realisierung einer FFT ist die Implementierung als rekursiver Algorithmus. Dabei wird das Feld mit den 2·n Abtastwerten einer Funktion als Parameter übergeben, die es in zwei halb so lange Felder (eines mit den Abtastwerten mit geradem Index und eines mit den Abtastwerten mit ungeradem Index) aufteilt. Diese beiden Felder werden an neue Instanzen dieser Funktion übergeben. Am Ende gibt jede Funktion die FFT des ihr als Parameter übergebenen Feldes zurück. Diese beiden FFTs werden nun, bevor eine Instanz der Funktion beendet wird, zu einer einzigen FFT kombiniert, und das Ergebnis wird an den Aufrufer zurückgegeben. Dies wird nun fortgeführt, bis das Argument eines Aufrufs der Funktion nur noch aus einem einzigen Element besteht. Die FFT eines einzelnen Werts ist aber genau der Wert selbst, denn der Wert besitzt sich selbst als Gleichanteil und keine weiteren Frequenzanteile. Die Funktion, die nur noch einen einzigen Wert als Parameter enthält, kann also ganz ohne Rechnung die FFT dieses Werts zurückliefern. Die Funktion, die sie aufgerufen hat, kombiniert die jeweils einen Abtastwert umfassenden FFTs, die sie zurückerhält, die Funktion, die diese wiederum aufgerufen hat, kombiniert die beiden aus zwei Werten bestehenden FFTs, usw.

Alternativ zu dem beschriebenen Ablauf kann eine schnelle Fourier-Transformation auch mittels eines nichtrekursiven Algorithmus implementiert werden.

Wenn das in Fig. 3A gezeigte diskrete Zeitsignal mittels einer schnellen Fourier-Transformation in den Frequenzbereich transformiert wird, erhält man als Ergebnis das in Fig. 3B gezeigte Frequenzspektrum 301. Entlang der Rechtsachse ist die Frequenz aufgetragen, und entlang der Hochachse ist die zugehörige Amplitude aufgetragen. Bei dem Frequenzspektrum 301 handelt es sich um ein diskretes Frequenzspektrum, das eine Anzahl von Frequenzabtastwerten 302 in einem regelmäßigen Raster umfasst. Dabei ist der zeitliche Abstand 303 zwischen benachbarten Frequenzabtastwerten durch die Anzahl N der zeitlichen Abtastwerte bestimmt, die der schnellen Fourier-Transformation als Eingangswerte zugeführt wurden. Je größer die Anzahl der Abtastwerte N gewählt ist, desto kleiner wird der Abstand 303 zwischen benachbarten Frequenzabtastwerten 302, und umso besser wird die Auflösung des Frequenzspektrums.

Die im Zwischenfrequenzsignal 111 enthaltenen Frequenzkomponenten sind im diskreten Frequenzspektrum 301 als Peaks erkennbar. Jeder Peak wird durch ein Radarziel verursacht, das sich in einem bestimmten Abstand vom Radarsensor befindet. Das vom Radarsensor ausgesandte Radarsignal wird am Radarziel reflektiert und zum Radarsensor zurückgeschickt. Je weiter das Radarziel vom Radarsensor entfernt ist, umso hochfrequenter wird die vom Radarziel verursachte Frequenzkomponente sein. Die Frequenz eines Peaks im Frequenzspektrum ermöglicht daher unmittelbar die Bestimmung der Entfernung des zugehörigen Radarziels. Die Umrechnung der Zielfrequenz in die Entfernung erfolgt entsprechend der Beziehung:

$$R = f_{Ziel} \cdot \frac{T_0 \cdot c}{2 \cdot \Delta f_0} \tag{4}$$

Dabei bezeichnet R die Entfernung, $f_{Ziel}$ die Zielfrequenz, $\Delta f_0$ den Frequenzhub, $T_0$ die Modulationsperiodendauer des Sendesignals und c die Lichtgeschwindigkeit. Je genauer die Lage der Peaks im Frequenzspektrum 301 ermittelt werden kann, desto genauer kann der Abstand R des Radarziels vom Radarsensor bestimmt werden.

In Fig. 3B ist beispielhaft ein Frequenzspektrum 301 mit lediglich einem Peak 304 gezeigt. Zur Detektion der Peaks im Frequenzspektrum 301 wird zunächst ermittelt, bei welchen Frequenzabtastwerten 302 die Frequenzamplitude $f_k$ oberhalb des Rauschpegels liegt, was auf das Vorhandensein eines Peaks rückschließen lässt. Hierzu können die Frequenzamplituden $f_k$ der Frequenzabtastwerte 302 beispielsweise mit einem vorgegebenen Schwellwert 305 verglichen werden. Bei dem in Fig. 3B gezeigten Beispiel erhält man auf diese Weise die drei Frequenzabtastwerte 306, 307, 308, die zum Peak 304 gehören. Mittels eines Interpolationsverfahrens kann ausgehend von den Frequenzamplituden der drei Frequenzabtastwerte 306, 307, 308 der Verlauf des Spektrums um das Peakmaximum herum interpoliert werden. Auf diese Weise kann die Lage des Maximums des Peaks 304, also die Peakfrequenz 309 bestimmt werden. Aus dieser Peakfrequenz 309 kann dann die Entfernung R des Radarziels abgeleitet werden.

Allerdings ist wegen des relativ groben Rasters der Frequenzabtastwerte 302 nur eine vergleichsweise ungenaue Bestimmung der Peakfrequenz 309 möglich. Daher kann mittels einer FFT und einer anschließenden Interpolation der Abstand eines Radarziels nur mit einer Genauigkeit im Bereich von Millimetern bis Zentimetern ermittelt werden. Dies ist für heutige hochgenaue Radarsensoren, welche insbesondere im Bereich der Füllstandsmessung eingesetzt werden, nicht mehr ausreichend. Das Ziel bei der Füllstandsmessung wäre, den Füllstand beispielsweise in einem großen Tank mit einer Genauigkeit im Submillimeterbereich angeben zu können.

Zur Verbesserung der Messgenauigkeit wäre es prinzipiell möglich, die Anzahl N von zeitlichen Abtastwerten zu vergrößern, um mittels der schnellen Fourier-Transformation ein feiner aufgelöstes Frequenzspektrum 301 zu erhalten. Um eine Messgenauigkeit im Submillimeterbereich, also beispielsweise von unter 0,5 mm zu erreichen, müssten allerdings ca. $2^{20}$ (ca. 1 Mio) zeitliche Abtastwerte verarbeitet werden, was auf gegenwärtigen Systemen nicht realisierbar ist.

Entsprechend den Ausführungsformen der vorliegenden Erfindung wird vorgeschlagen, die Peaks im Frequenzspektrum wie bisher anhand des vergleichsweise groben Rasters der Frequenzabtastwerte zu bestimmen und anschließend in einem weiteren Schritt in der Umgebung der detektierten Peaks das Frequenzraster durch Einführung von zusätzlichen Frequenzstützstellen zu verfeinern. In Fig. 3B sind diese zusätzlichen Frequenzstützstellen 310 mit eingezeichnet. Für jede der neu eingeführten Frequenzstützstellen 310 wird die zugehörige Frequenzamplitude bestimmt. Dabei kann zur selektiven Bestimmung der Spektralamplitude an den zusätzlich eingeführten Frequenzstützstellen 310 entweder die diskrete Fourier-Transformation (DFT) ausgerechnet werden, oder es kann der Goertzel-Algorithmus angewandt werden.

Der Goertzel-Algorithmus ermöglicht eine effiziente Berechnung der Frequenzamplituden von einzelnen Spektralkomponenten. Daher ist ein Einsatz des Goertzel-Algorithmus insbesondere dann vorteilhaft, wenn nicht das komplette Frequenzspektrum bestimmt werden soll, sondern nur einige wenige Spektralkomponenten an ausgewählten Frequenzen. Mit Hilfe des Goertzel-Algorithmus ist es insbesondere möglich, einzelne Frequenzamplituden an bestimmten Frequenzen mit vergleichsweise geringem rechnerischem Aufwand zu bestimmen. Eine Beschreibung des Goertzel-Algorithmus findet sich im Anhang A.

Durch die Einführung von zusätzlichen Frequenzstützstellen 310 wird das Frequenzspektrum 301 genau dort, wo sich die Peaks befinden, mit sehr hoher Auflösung im Frequenzbereich abgetastet. Zur Interpolation eines Peaks 304 werden dann sowohl die von der FFT gelieferten Frequenzabtastwerte 306, 307, 308 als auch die Frequenzamplituden an den zusätzlich eingeführten Frequenzstützstellen 310 herangezogen. Damit wird der Verlauf des Spektrums in der Umgebung des Peakmaximums wesentlich genauer nachgezeichnet. Basierend auf geeigneten Interpolationsverfahren lässt sich dann die Peakfrequenz 309, also die Lage des Peaks 304 im Frequenzspektrum 301, sehr genau bestimmen. Durch die Einführung und rechnerische Berücksichtigung der zusätzlichen Frequenzstützstellen 310 kann bei der Bestimmung der Entfernung von Radarzielen die gewünschte Messgenauigkeit im Submillimeterbereich erreicht werden.

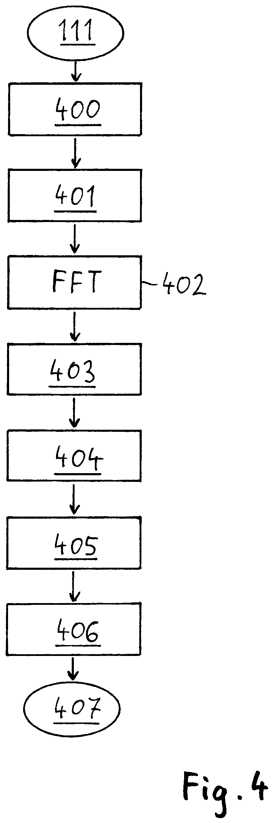

In Fig. 4 sind die einzelnen Schritte des Verfahrens zur Auswertung des Zeitsignals nochmals im Überblick dargestellt. Als Ausgangspunkt für die Berechnung des Frequenzspektrums dient das digitalisierte Zwischenfrequenzsignal 111. Dieses digitalisierte Zwischenfrequenzsignal 111 umfasst eine Zeitreihe von zeitlichen Abtastwerten.

Im ersten Schritt 400 wird der Mittelwert der zeitlichen Abtastwerte bestimmt, und dieser Mittelwert wird dann von jedem der zeitlichen Abtastwerte abgezogen. Als Ergebnis erhält man korrigierte zeitliche Abtastwerte, die keinen Gleichanteil mehr aufweisen.

Im darauffolgenden Schritt 401, der sogenannten "Fensterung", wird ein Ausschnitt aus der Zeitreihe der Abtastwerte festgelegt. Dieser Ausschnitt aus der Zeitreihe dient als Ausgangspunkt für eine schnelle Fourier-Transformation (FFT) und sollte daher $2^n$ zeitliche Abtastwerte umfassen, wobei n eine natürliche Zahl ist.

Im nächsten Schritt 402 wird die Folge von zeitlichen Abtastwerten mit Hilfe der schnellen Fourier-Transformation (FFT, Fast Fourier Transform) in den Frequenzbereich transformiert. Als Ergebnis der schnellen Fourier-Transformation erhält man ein diskretes Frequenzspektrum.

Im folgenden Schritt 403 werden die im Frequenzspektrum enthaltenen Peaks detektiert. Zur Detektion der Peaks kann beispielsweise ermittelt werden, an welchen Stellen des Frequenzspektrums die Frequenzamplitude oberhalb eines vorgegebenen Schwellwerts liegt.

Nachdem die Peaks des Frequenzspektrums nun bekannt sind, werden im darauf folgenden Schritt 404 in der Umgebung dieser Peaks zusätzliche Frequenzstützstellen eingeführt. Mit Hilfe dieser zusätzlichen Frequenzstützstellen wird das relativ grobe Frequenzraster, das von der FFT geliefert wurde, weiter unterteilt. Auf diese Weise wird die Auflösung des Frequenzspektrums selektiv in der Umgebung der aufgefundenen Peaks verbessert. Zu jeder zusätzlich eingeführten Frequenzstützstelle wird die zugehörige Frequenzamplitude berechnet, wobei zur Berechnung der Frequenzamplitude vorzugsweise der Goertzel-Algorithmus eingesetzt wird. Alternativ dazu könnten die Frequenzamplituden an den zusätzlichen Frequenzstützstellen auch mittels einer diskreten Fourier-Transformation (DFT) berechnet werden.

Im darauffolgenden Schritt 405 wird die Lage des Peaks im Frequenzspektrum bzw. die Peakfrequenz mit höchstmöglicher Genauigkeit bestimmt. Hierzu wird unter Verwendung eines geeigneten Interpolationsverfahrens ermittelt, an welcher Stelle des Peaks die Frequenzamplitude ihr Maximum annimmt. Bei dieser Interpolation werden sowohl die von der FFT gelieferten Frequenzamplituden als auch die Frequenzamplituden an den zusätzlich eingeführten Frequenzstützstellen berücksichtigt.

Im letzten Schritt 406 wird die mit hoher Genauigkeit bestimmte Peakfrequenz in eine Entfernung des Radarziels umgerechnet. Auf diese Weise kann die Entfernung 407 des Radarziels mit einer Auflösung im Submillimeterbereich bestimmt werden.

Für die Einführung zusätzlicher Frequenzstützstellen gibt es verschiedene Möglichkeiten, wobei im Folgenden drei dieser Möglichkeiten näher beschrieben werden sollen.

Entsprechend einer ersten Möglichkeit wird das von der FFT vorgegebene Frequenzraster in der Umgebung eines Peaks durch fortgesetzte Intervallhalbierung weiter unterteilt, d. h. es wird jeweils in der Mitte zwischen zwei benachbarten Frequenzabtastwerten eine zusätzliche Frequenzstützstelle eingeführt. Durch fortgesetzte Intervallhalbierung kann die Auflösung des Frequenzspektrums beliebig verfeinert werden.

Gemäß einer zweiten Möglichkeit werden die Frequenzintervalle zwischen benachbarten Frequenzabtastwerten durch die Einführung zusätzlicher Frequenzstützstellen asymmetrisch unterteilt, wobei als Teilungsverhältnis beispielsweise der Goldene Schnitt infrage käme. Durch eine fortgesetzte Intervallunterteilung entsprechend dem Goldenen Schnitt kann ebenfalls jede gewünschte Auflösung des Frequenzspektrums erreicht werden.

Gemäß einer dritten Möglichkeit wird zur Bestimmung der Peakfrequenz das "Verfahren von Brent" herangezogen, das beispielsweise in Kapitel 10.2 des Standardwerks "Numerical Recipes in C: the Art of Scientific Computing", William H. Press, 2nd ed. 1992 beschrieben ist. Entsprechend diesem Näherungsverfahren wird durch die von der FFT gelieferten Frequenzabtastwerte eine erste Näherungsparabel gelegt, die den Verlauf des Spektrums in der Umgebung des Peakmaximums approximiert. Der Scheitelpunkt dieser Näherungsparabel wird als zusätzliche Frequenzstützstelle eingeführt, welche zur Bestimmung einer zweiten Näherungsparabel herangezogen wird. Durch die zweite Näherungsparabel wird der Verlauf des Spektrums in der Umgebung des Peakmaximums mit noch höherer Genauigkeit approximiert. Auf diese Weise kann die Peakfrequenz als Scheitelpunkt einer Serie von konvergierenden Näherungsparabeln gewonnen werden.

Im Folgenden sollen diese drei Verfahren zur Verfeinerung des Frequenzspektrums näher diskutiert werden.

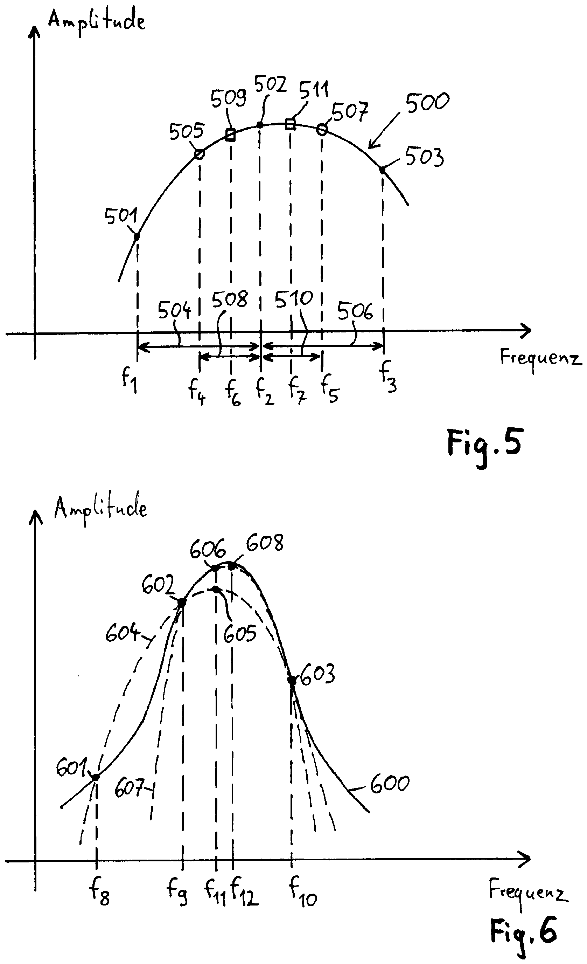

Anhand von Fig. 5 soll das Verfahren der fortgesetzten Intervallhalbierung beispielhaft veranschaulicht werden. In Fig. 5 ist ein Peak 500 des Frequenzspektrums dargestellt. Entlang der Rechtsachse ist die Frequenz aufgetragen, und entlang der Hochachse ist die Frequenzamplitude aufgetragen. Die schnelle Fourier-Transformation liefert die Punkte 501, 502, 503 bei den Frequenzen $f_1$, $f_2$ und $f_3$. Dieses relativ grobe Frequenzraster, das von der schnellen Fourier-Transformation (FFT) geliefert wird, soll nun durch die Einführung zusätzlicher Frequenzstützstellen weiter unterteilt werden. Hierzu wird das Frequenzintervall 504 zwischen den Frequenzen $f_1$ und $f_2$ mittig unterteilt, um auf diese Weise eine zusätzliche Frequenzstützstelle $f_4$ zu definieren. Die zu der Frequenz $f_4$ gehörige Frequenzamplitude wird mit Hilfe des Goertzel-Algorithmus bestimmt. Auf diese Weise erhält man den zusätzlichen Punkt 505 des Frequenzspektrums. Ebenso wird das Frequenzintervall 506 zwischen der Frequenz $f_2$ und der Frequenz $f_3$ mittig unterteilt, um auf diese Weise die zusätzliche Frequenzstützstelle $f_5$ zu definieren. Die zur Frequenz $f_5$ gehörige Frequenzamplitude wird mit Hilfe des Goertzel-Algorithmus bestimmt. Auf diese Weise erhält man den zusätzlichen Punkt 507 des Frequenzspektrums. Aus den bisher gefundenen fünf Punkten 501, 505, 502, 507, 503 werden nun die drei benachbarten Punkte mit den höchsten Frequenzamplituden ausgewählt. Im Beispiel von Fig. 5 sind das die drei Punkte 505, 502 und 507. Zur weiteren Verfeinerung des Frequenzspektrums wird das Frequenzintervall 508 zwischen den Frequenzen $f_4$ und $f_2$ mittig unterteilt, um auf diese Weise eine zusätzliche Frequenzstützstelle $f_6$ zu definieren. Die Frequenzamplitude zur Frequenz $f_6$ wird mittels des Goertzel-Algorithmus bestimmt, und man erhält den zusätzlichen Punkt 509. Ebenso wird das Frequenzintervall 510 zwischen den Frequenzen $f_2$ und $f_5$ mittig unterteilt, und als Ergebnis dieser Intervallhalbierung erhält man die zusätzliche Frequenzstützstelle $f_7$. Die Frequenzamplitude zur Frequenz $f_7$ wird mittels des Goertzel-Algorithmus bestimmt, und man erhält den zusätzlichen Punkt 511. Von den bisher ermittelten Punkten des Frequenzspektrums weisen die drei Punkte 502, 511 und 507 die höchsten Frequenzamplituden auf und können als Ausgangspunkt für eine weitere Iteration der Intervallhalbierung herangezogen werden. Sobald eine gewünschte Auflösung des Frequenzspektrums erreicht ist, wird die Intervallhalbierung abgebrochen. Als Peakfrequenz wird dann die Frequenz desjenigen Punktes ausgegeben, für den die bislang höchste Frequenzamplitude ermittelt wurde.

Bei dem in Fig. 5 gezeigten Verfahren sind die Frequenzintervalle zwischen benachbarten Punkten jeweils mittig unterteilt worden, um so zusätzliche Frequenzstützstellen einzuführen und auf diese Weise die Auflösung des Spektrums zu verfeinern. Dagegen werden bei dem zweiten Verfahren zur fortgesetzten Intervallteilung die Frequenzintervalle zwischen benachbarten Punkten in der Umgebung eines Peaks jeweils asymmetrisch entsprechend einem vorgegebenen Teilungsverhältnis unterteilt. Beispielsweise können die Frequenzintervalle im Verhältnis des Goldenen Schnitts unterteilt werden. Durch die asymmetrische Unterteilung werden zusätzliche Frequenzstützpunkte definiert. Die Frequenzamplituden an diesen zusätzlichen Frequenzstützpunkten werden mittels des Goertzel-Algorithmus bestimmt. Die benachbarten Punkte mit den höchsten Frequenzamplituden dienen als Basis für die nächste Iteration. Die Frequenzintervalle zwischen diesen Punkten werden wiederum asymmetrisch entsprechend dem Verhältnis des Goldenen Schnitts unterteilt. Das Verfahren der asymmetrischen Intervallunterteilung wird solange fortgesetzt, bis eine gewünschte Auflösung des Frequenzspektrums erreicht ist. Dann wird die Intervallunterteilung abgebrochen. Als Peakfrequenz wird dann die Frequenz desjenigen Punktes ausgegeben, für den die bislang höchste Frequenzamplitude ermittelt wurde. Durch die asymmetrische Unterteilung der Frequenzintervalle kann das Konvergenzverhalten in einigen Fällen positiv beeinflusst werden.

In Fig. 6 ist veranschaulicht, wie mit Hilfe des "Verfahrens von Brent" das Maximum eines Peaks im Frequenzspektrum bestimmt werden kann. Das "Verfahren von Brent" ist beispielsweise in Kapitel 10.2 des Standardwerks "Numerical Recipes in C: the Art of Scientific Computing", William H. Press, 2nd ed. 1992 beschrieben und wird hiermit durch Inbezugnahme in die Offenbarung dieser Anmeldung aufgenommen.

In Fig. 6 ist ein Peak 600 des Frequenzspektrums gezeigt. Entlang der Rechtsachse ist die Frequenz aufgetragen, und entlang der Hochachse ist die Frequenzamplitude aufgetragen. Außerdem sind in Fig. 6 drei Frequenzabtastwerte 601, 602, 603 bei den Frequenzen $f_8$, $f_9$, $f_{10}$ eingezeichnet, die als Ergebnis der schnellen Fourier-Transformation erhalten wurden. Im ersten Schritt des "Verfahrens von Brent" wird der Peak 600 durch eine erste Näherungsparabel 604 approximiert, welche durch die Frequenzabtastwerte 601, 602, 603 definiert wird. Die erste Näherungsparabel 604 hat ihren Scheitelpunkt 605 bei der Frequenz $f_{11}$. Diese Frequenz $f_{11}$ des Scheitelpunkts 605 wird als zusätzliche Frequenzstützstelle für die nächste Iteration der Parabelnäherung verwendet. Dazu wird die Frequenzamplitude an der zusätzlichen Frequenzstützstelle bei der Frequenz $f_{11}$ mittels des Goertzel-Algorithmus berechnet. Auf diese Weise erhält man den zusätzlichen Punkt 606 des Frequenzspektrums. Für die nächste Iteration werden nun die drei Punkte 602, 606, 603 des Spektrums verwendet, welche die höchsten bislang ermittelten Frequenzamplituden aufweisen. Diese drei Punkte 602, 606, 603 legen eine zweite Näherungsparabel 607 fest, die den Verlauf des Peaks 600 in der Umgebung des Peakmaximums noch besser approximiert als die erste Näherungsparabel 604. Die zweite Näherungsparabel 607 hat ihren Scheitelpunkt 608 bei der Frequenz $f_{12}$. Die Frequenz $f_{12}$ könnte bereits als hinreichend genauer Näherungswert für das Peakmaximum betrachtet werden. Falls die Genauigkeit als ausreichend angesehen wird, würde man die Berechnung an dieser Stelle abbrechen. Alternativ dazu könnte man die Genauigkeit gegebenenfalls noch weiter verbessern, indem man die Frequenz $f_{12}$ des Scheitelpunkts 608 als zusätzliche Frequenzstützstelle für eine weitere Iteration der Parabelnäherung verwendet.

Der Vorteil des "Verfahrens von Brent" ist, dass der Verlauf eines Peaks in der Umgebung seines Maximums ohnehin einer Parabel ähnelt und der Verlauf des Peaks in der Umgebung des Peakmaximums durch eine Näherungsparabel sehr gut approximiert werden kann. Wenn man den Peakverlauf durch eine Reihe von Näherungsparabeln approximiert, konvergieren diese Näherungsparabeln daher sehr rasch. Dadurch kann das Peakmaximum bereits durch wenige Iterationen mit hoher Genauigkeit ermittelt werden.

Der Goertzel-Algorithmus

Als Ausgangspunkt für die Herleitung des Goertzel-Algorithmus dient die diskrete Fourier-Transformation (DFT), welche in allgemeiner Form geschrieben werden kann als:

$$X(k) = \sum_{m=0}^{N-1} x(m) \cdot e^{-2\pi i \frac{km}{N}} \qquad (5)$$

Um die Schreibweise zu vereinfachen, werden die Phasenfaktoren im Folgenden durch die Symbole $W_N^j$ repräsentiert:

$$W_N^j = e^{-2\pi i \frac{j}{N}} \qquad (6)$$

Damit kann die diskrete Fourier-Transformation geschrieben werden als

$$X(k) = \sum_{m=0}^{N-1} x(m) \cdot W_N^{km} \qquad (7)$$

Für ganzzahlige k gilt $W_N^{-kN} = 1$ und die diskrete Fourier-Transformation kann mit diesem Faktor $W_N^{-kN}$ multipliziert werden, ohne dass sich etwas ändert:

$$X(k) = W_N^{-kN} \cdot \sum_{m=0}^{N-1} x(m) \cdot W_N^{km} = \sum_{m=0}^{N-1} x(m) \cdot W_N^{-k(N-m)} \qquad (8)$$

Aus dieser Gleichung ist erkennbar, dass es sich um eine Faltung handelt. Wenn die Folge $y_k(n)$ definiert wird als

$$y_k(n) = \sum_{m=0}^{N-1} x(m) \cdot W_N^{-k(n-m)} \qquad (9)$$

dann ist klar, dass die $y_k(n)$ durch Faltung einer Eingangsfolge x(n) der Länge N (also von endlicher Dauer) mit einem Filter gebildet werden. Aus dem Vergleich der Gleichungen (8) und (9) folgt, dass der Ausgang dieses Filters zum Zeitpunkt n=N das gesuchte Ergebnis der DFT liefert, nämlich die Frequenzamplitude bei der Frequenz $\omega_k = \frac{2\pi k}{N}$ :

$$X(k) = y_k(n)\big|_{n=N} \qquad (10)$$

Das Filter, mit dem die Eingangsfolge x(n) in Gleichung (9) gefaltet wird, ist durch folgende Impulsantwort $h_k(n)$ gekennzeichnet:

$$h_k(n) = W_N^{-kn} \cdot u(n) \qquad (11)$$

Dabei bezeichnet u(n) eine Schrittfunktion, die für n<0 gleich Null ist und für n≥0 gleich Eins ist. Für das Filter mit der oben angegebenen Impulsantwort $h_k(n)$ wird nun eine z-Transformation durchgeführt, um die Übertragungsfunktion $H_k(z)$ für dieses Filter zu ermitteln. Man erhält die Übertragungsfunktion:

$$H_k(z) = \frac{1}{1 - W_N^{-k} z^{-1}} \qquad (12)$$

Dieser Übertragungsfunktion besitzt auf dem Einheitskreis einen Pol bei der Frequenz $\omega_k = \frac{2\pi k}{N}$. Eine derartige Übertragungsfunktion repräsentiert einen Resonator bei der Frequenz $\omega_k$. Insofern kann die gesamte DFT berechnet werden, indem man den Block von Eingangsdaten in eine parallele Bank von N Einzelpolfiltern bzw. Resonatoren einspeist, wobei jedes der Filter eine Polstelle bei der jeweiligen Frequenz der DFT aufweist.

Anstatt die DFT wie in Gleichung (9) durch eine Faltung zu berechnen, kann das Filterverhalten auch durch eine aus der Übertragungsfunktion $H_k(z)$ abgeleitete Differenzengleichung dargestellt werden. Eine derartige Differenzengleichung ermöglicht eine rekursive Berechnung von $y_k(n)$. Man erhält als Differenzengleichung

$$y_k(n) = W_N^{-k} \cdot y_k(n-1) + x(n) \quad \text{mit} \quad y_k(-1) = 0 \qquad (13)$$

Das gewünschte Ergebnis ist $X(k) = y_k(N)$, für k=0, 1, ... N-1. Zur Durchführung dieser Berechnung ist es vorteilhaft, die Phasenfaktoren $W_N^{-k}$ einmal vorab zu berechnen und zu speichern.

Die zur Berechnung der Differenzengleichung (13) erforderlichen komplexen Multiplikationen und Additionen können vermieden werden, indem jeweils Paare von Resonatoren, welche komplex konjugierte Pole besitzen, miteinander kombiniert werden. Auf diese Weise erhält man zweipolige Filter mit Übertragungsfunktionen der Form

$$H_k(z) = \frac{1 - W_N^k z^{-1}}{1 - 2\cos\left(\frac{2\pi k}{N}\right) z^{-1} + z^{-2}} \qquad (14)$$

Ein Filter mit dieser Übertragungsfunktion $H_k(z)$ kann durch die folgenden beiden Differenzengleichungen dargestellt werden:

$$v_k(n) = 2\cos\left(\frac{2\pi k}{N}\right) \cdot v_k(n-1) - v_k(n-2) + x(n) \qquad (15)$$

$$y_k(n) = v_k(n) - W_N^k v_k(n-1) \qquad (16)$$

mit den Anfangsbedingungen $v_k(-1) = v_k(-2) = 0$.

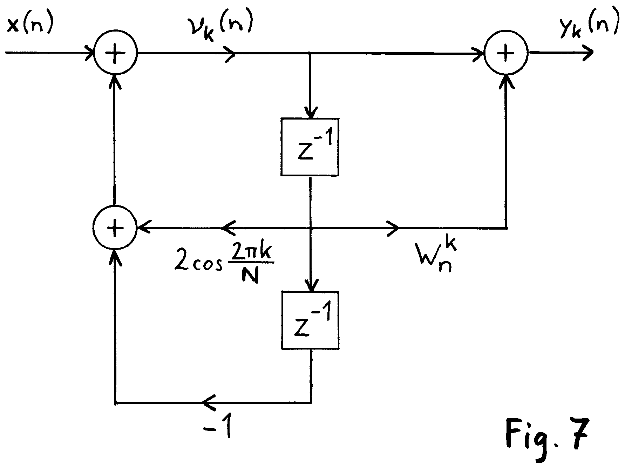

Fig. 7 zeigt eine graphische Darstellung dieses zweipoligen Filters, der durch die Übertragungsfunktion (14) bzw. die Differenzengleichungen (15), (16) definiert ist. Es ist erkennbar, dass der um eine Iteration verzögerte Eingangswert mit dem Faktor $2 \cdot \cos\left(\frac{2\pi k}{N}\right)$ zum Eingang rückgekoppelt wird, wohingegen der um zwei Iterationen verzögerte Eingangswert mit negativen Vorzeichen zum Eingang rückgekoppelt wird. Den Wert $y_k(n)$ am Ausgang erhält man dann, indem man vom Eingangswert den mit dem Faktor $W_N^k$ multiplizierten, um eine Iteration verzögerten Eingangswert abzieht. Dies entspricht den in den Gleichungen (15) und (16) angegebenen Iterationsvorschriften. Die rekursive Beziehung in (15) wird für n=0, 1, ... N iteriert, die Gleichung (16) muss aber nur ein einziges Mal zur Zeit n=N ausgewertet werden. Jede Iteration erfordert lediglich eine reelle Multiplikation und zwei Additionen. Folglich erfordert dieser Algorithmus für eine reelle Eingangssequenz x(n) n+1 reelle Multiplikationen. Der Goertzel-Algorithmus ist insbesondere dann attraktiv, wenn die DFT nur für eine relativ kleine Anzahl M von Werten berechnet werden soll, wobei $M \leq \log_2 N$.

Die Einschränkung von k auf ganze Zahlen in Gl. (8) dient der übersichtlichen Herleitung des Goertzel-Algorithmus. Für die Anwendung der DFT (FFT) und des Goertzel-Filters gilt diese Einschränkung nicht, sie bedeutet aber, dass für ganzzahlige Werte von k die DFT und der Goertzel-Algorithmus exakt dieselben Ergebnisse in Amplitude und Phase liefern. Für nicht-ganzzahlige Werte von k unterscheiden sich DFT und Goertzel-Algorithmus durch einen Faktor $W_N^{-kN}$, dessen Betrag 1 ist und nur die Phase dreht. Die Amplitudenwerte beider Verfahren stimmen jedoch immer überein.

**Patentansprüche**

1. Verfahren zur Bestimmung von Entfernungen zu Radarzielen (104) mittels FMCW-Radar, welches umfasst:

   - Aussenden eines frequenzmodulierten Sendesignals (113),
   - Empfangen eines an mindestens einem Radarziel (104) reflektierten Empfangssignals (114),
   - Heruntermischen des Empfangssignals (114) in ein Zwischenfrequenzsignal (111),
   - Transformieren (402) des Zwischenfrequenzsignals (111) in den Frequenzbereich mittels einer schnellen Fourier-Transformation, wobei ein Frequenzspektrum (301) als Folge von Frequenzabtastwerten (302, 306, 307, 308) erhalten wird,
   - Detektieren (403) von Peaks (304) im Frequenzspektrum (301),
   **gekennzeichnet durch**

   a) Auswählen von zumindest drei benachbarten Punkten (501, 502, 503, 601, 602, 603, 606) des Frequenzspektrums in einer Umgebung eines Peaks (500, 600), welche höchste bislang ermittelte Frequenzamplituden aufweisen,
   b) Festlegen einer Näherungsparabel (604, 607) durch die zumindest drei Punkte (601, 602, 603, 606), und Einführen einer Frequenz ($f_{11}$, $f_{12}$) eines Scheitelpunkts der Näherungsparabel (604, 607) als zusätzliche Frequenzstützstelle, oder Einführen von zusätzlichen Frequenzstützstellen ($f_4$, $f_5$, $f_6$, $f_7$) durch Unterteilen von Frequenzintervallen ($f_1$, $f_2$, $f_3$) zwischen den zumindest drei benachbarten Punkten (501, 502, 503) im Frequenzbereich in der Umgebung des Peaks (500),
   c) Bestimmen der Frequenzamplitude an zumindest einer zusätzlichen Frequenzstützstelle ($f_4$, $f_5$, $f_6$, $f_7$, $f_{11}$, $f_{12}$) mittels des Goertzel-Algorithmus,
   d) Wiederholen der Schritte a) bis c), bis eine Lage eines Peakmaximums (309) des Peaks (500, 600) mit einer vorgegebenen Genauigkeit bestimmt ist, und

   - Umrechnen (406) der Lage des Peakmaximums (309) in eine Entfernung des Radarziels (104).

2. Verfahren nach Anspruch 1,
   **gekennzeichnet durch mindestens eines von folgenden:**

   - das Zwischenfrequenzsignal (111) umfasst eine Folge von Zeitabtastwerten im Zeitbereich;
   - eine schnelle Fourier-Transformation überführt das Zwischenfrequenzsignal (111), das eine Folge von Zeitabtastwerten (300) im Zeitbereich umfasst, in eine Folge von Frequenzabtastwerten (302, 306, 307, 308) im Frequenzbereich;
   - das Zwischenfrequenzsignal (111) umfasst eine Folge von Zeitabtastwerten (300) im Zeitbereich, wobei vor Durchführung der schnellen Fourier-Transformation ein Mittelwert des Zwischenfrequenzsignals (111) ermittelt wird, und wobei der Mittelwert vor Durchführung der schnellen Fourier-Transformation von jedem der Zeitabtastwerte (300) abgezogen wird;
   - das Zwischenfrequenzsignal (111) umfasst eine Folge von Zeitabtastwerten im Zeitbereich (300), wobei vor Durchführung der schnellen Fourier-Transformation aus der Folge von Zeitabtastwerten (300) ein Ausschnitt für die schnelle Fourier-Transformation ausgewählt wird;
   - das Zwischenfrequenzsignal (111) umfasst eine Folge von Zeitabtastwerten (300) im Zeitbereich, wobei vor Durchführung der schnellen Fourier-Transformation aus der Folge von Zeitabtastwerten (300) ein Ausschnitt für die schnelle Fourier-Transformation ausgewählt wird, wobei der Ausschnitt $2^n$ Zeitabtastwerte (300) umfasst, wobei n eine natürliche Zahl ist;

- die schnelle Fourier-Transformation liefert ein regelmäßiges Raster (303) von Frequenzabtastwerten (302, 306, 307, 308) im Frequenzbereich.

3. Verfahren nach Anspruch 1 oder Anspruch 2, **gekennzeichnet durch mindestens eines von folgenden:**

  - zum Detektieren von Peaks im Frequenzspektrum (301) werden von der schnellen Fourier-Transformation gelieferten Frequenzabtastwerte (302, 306, 307, 308) mit einem Schwellwert (305) verglichen, wobei bei Überschreiten des Schwellwerts (305) ein Peak (304) detektiert wird;
  - das von der schnellen Fourier-Transformation gelieferte regelmäßige Raster (303) von Frequenzabtastwerten (302, 306, 307, 308) wird in der Umgebung des detektierten Peaks (304) durch Einführen der mindestens einen zusätzlichen Frequenzstützstelle (310) weiter unterteilt;
  - eine Frequenzauflösung des Frequenzspektrums (301) wird in der Umgebung des detektierten Peaks (304) verbessert, indem das von der schnellen Fourier-Transformation gelieferte regelmäßige Raster (303) von Frequenzabtastwerten (302, 306, 307, 308) durch Einführen der mindestens einen zusätzlichen Frequenzstützstelle (310) weiter unterteilt wird;
  - durch Einführen der mindestens einen zusätzlichen Frequenzstützstelle (310) in der Umgebung des detektieren Peaks (304) wird eine Bestimmung der Lage (309) des Peakmaximums des Peaks (304) mit erhöhter Genauigkeit ermöglicht.

4. Verfahren nach einem der Ansprüche 1 bis 3, **gekennzeichnet durch folgenden Schritt:**

  - Interpolieren des Peakverlaufs in der Umgebung des Peakmaximums des detektieren Peaks (304) unter Verwendung sowohl der Frequenzabtastwerte als auch der Frequenzamplituden an der mindestens einen zusätzlichen Frequenzstützstelle (310).

5. Verfahren nach einem der Ansprüche 1 bis 4, **dadurch gekennzeichnet, dass** die Lage des Peakmaximums des Peaks (600) ausgehend von den durch die schnelle Fourier-Transformation gelieferten Frequenzabtastwerten (601, 602, 603) mittels parabolischer Interpolation entsprechend dem Verfahren von Brent bestimmt wird.

6. Verfahren nach einem der Ansprüche 1 bis 5, **gekennzeichnet durch mindestens eines von folgenden:**

  - das Verfahren wird in einem Füllstandsmessgerät (200) zur Bestimmung eines Füllstands mittels FMCW-Radar eingesetzt;
  - das Verfahren wird im Rahmen einer Füllstandsmessung mittels FMCW-Radar eingesetzt, um den Füllstand in einem Behälter oder einem Tank (201) zu bestimmen.

7. Verwendung des Verfahrens nach einem der Ansprüche 1 bis 6 in einem entsprechend dem Prinzip des FMCW-Radars arbeitenden Füllstandsmessgerät (200) zur Bestimmung eines Füllstands in einem Behälter oder einem Tank (201).

8. Entfernungsmessgerät zur Bestimmung der Entfernung von Radarzielen (104) mittels FMCW-Radar, welches aufweist:

  - eine Sendeeinheit, welche ein Radar-Sendesignal (113) aussendet,
  - eine Empfangseinheit, welche ein an mindestens einem Radarziel (104) reflektiertes Radar-Empfangssignal (114) empfängt, das Radar-Empfangssignal (114) in einen Zwischenfrequenzbereich heruntermischt und ein erhaltenes Zwischenfrequenzsignal (109) digitalisiert, **gekennzeichnet durch**
  - eine Auswerteeinheit (112), welche dazu ausgelegt ist, eine Lage eines Peakmaximums (309) von mindestens einer in dem digitalisierten Zwischenfrequenzsignal (111) enthaltenen Frequenzkomponente mittels des Verfahrens nach einem der Ansprüche 1 bis 6 zu bestimmen.

9. Entfernungsmessgerät nach Anspruch 8, **gekennzeichnet durch** mindestens eines von folgenden:

- bei dem Entfernungsmessgerät handelt es sich um ein Füllstandsmessgerät (200);
- bei dem Entfernungsmessgerät handelt es sich um ein Füllstandsmessgerät (200), welches dazu ausgelegt ist, einen Füllstand in einem Behälter oder einem Tank (201) zu bestimmen;
- bei dem Entfernungsmessgerät handelt es sich um ein Feldgerät für den Einsatz im Bereich der Prozessautomatisierung.

## Claims

1. Procedure for determining the distances to radar targets (104) using an FMCW radar, said procedure comprising:

- transmission of a frequency modulated transmission signal (113),
- reception of a reception signal (114) reflected by at least one radar target (104),
- conversion of the reception signal (114) to an intermediate frequency signal (111),
- transformation (402) of the intermediate frequency signal (111) into the frequency domain by means of a fast Fourier transform, wherein a frequency spectrum (301) is obtained as a sequence of frequency sample values (302, 306, 307, 308),
- detection (403) of peaks (304) in the frequency spectrum (301),
**characterized by:**

a) Selection of at least three adjacent points (501, 502, 503, 601, 602, 603, 606) of the frequency spectrum in a vicinity of a peak (500, 600), which have the highest frequency amplitudes determined so far,
b) Definition of an approximation parabola (604, 607) by the at least three points (601, 602, 603, 606), and introduction of a frequency ($f_{11}$, $f_{12}$) of a vertex of the approximation parabola (604, 607) as an additional frequency support point, or introduction of additional frequency support points ($f_4$, $f_5$, $f_6$, $f_7$) by subdividing frequency intervals ($f_1$, $f_2$, $f_3$) between the at least three adjacent points (501, 502, 503) in the frequency domain in the vicinity of the peak (500),
c) Determination of the frequency amplitude at at least one additional frequency support point ($f_4$, $f_5$, $f_6$, $f_7$, $f_{11}$, $f_{12}$) using the Goertzel algorithm,
d) Repetition of steps a) to c) until a position of a peak maximum (309) of the peak (500, 600) is determined with a predefined accuracy, and

- Conversion (406) of the position of the peak maximum (309) to a distance of the radar target (104).

2. Procedure as claimed in Claim 1,
**characterized by at least one of the following:**

- the intermediate frequency signal (111) comprises a sequence of sample values over time in a time domain;
- a fast Fourier transform quickly transforms the intermediate frequency signal (111) comprising a sequence of sample values over time (300) in the time domain to a sequence of frequency sample values (302, 306, 307, 308) in the frequency domain ;
- the intermediate frequency signal (111) comprises a sequence of sample values over time (300) in the time domain, wherein a mean value of the intermediate frequency signal (111) is determined before the fast Fourier transform is performed, and wherein the mean value is subtracted from each of the sample values over time (300) before the fast Fourier transform is performed;
- the intermediate frequency signal (111) comprises a sequence of sample values over time (300) in the time domain, wherein, from the sequence of sample values over time (300), a section is selected for the fast Fourier transform before the fast Fourier transform is performed;
- the intermediate frequency signal (111) comprises a sequence of sample values over time (300) in the time domain, wherein, from the sequence of sample values over time (300), a section is selected for the fast Fourier transform before the fast Fourier transform is performed, wherein the section comprises $2^n$ sample values overtime, n being a natural number;
- the fast Fourier transform provides a regular grid (303) of frequency sample values (302, 306, 307, 308) in the frequency domain.

3. Procedure as claimed in Claim 1 or 2,
**characterized by at least one of the following:**

- to detect the peaks in the frequency spectrum (301), frequency sample values (302, 306, 307, 308) provided by the fast Fourier transform are compared to a threshold value (305), wherein a peak (304) is detected when the threshold value (305) is exceeded;
- the regular grid (303) of frequency sample values (302, 306, 307, 308) provided by the fast Fourier transform is subdivided further in the vicinity of the detected peak (304) by introducing the at least one additional frequency support point (310);
- a frequency resolution of the frequency spectrum (301) is improved in the vicinity of the detected peak (304) by further subdividing the regular grid (303) of frequency sample values (302, 306, 307, 308) provided by the fast Fourier transform by introducing the at least one additional frequency support point (310);
- by introducing the at least one additional frequency support point (310) in the vicinity of the detected peak (304), it is possible to determine the position (309) of the maximum of the peak (304) with increased accuracy.

4. Procedure as claimed in one of the Claims 1 to 3,
   **characterized by the following step:**

   - interpolation of the peak pattern in the vicinity of the maximum of the detected peak (304) using both the frequency sample values and the frequency amplitudes at the at least one additional frequency support point (310).

5. Procedure as claimed in one of the Claims 1 to 4,
   **characterized in that**
   the position of the maximum of the peak (600) is determined on the basis of the frequency sample values (601, 602, 603) provided by the fast Fourier transform using parabolic interpolation according to the Brent method.

6. Procedure as claimed in one of the Claims 1 to 5,
   **characterized by at least one of the following:**

   - the procedure is used in a level transmitter (200) to determine a level using an FMCW radar;
   - the procedure is used within the framework of a level measurement using an FMCW radar to determine the level in a vessel or tank (201).

7. Use of the procedure as claimed in one of the Claims 1 to 6 in a level meter (200) that operates according to the principle of the FMCW radar to determine a level in a vessel or tank (201).

8. Distance measuring device designed to determine the distance of radar targets (104) using an FMCW radar, said device comprising:

   - a transmission unit, which emits a radar transmission signal (113),
   - a reception unit, which receives a radar reception signal (114) reflected by at least one radar target (104), converts the radar reception signal to an intermediate frequency range and digitizes a resulting intermediate frequency signal (109) **characterized by**
   - an evaluation unit (112), which is designed to determine a position of a peak maximum (309) of at least one frequency component contained in the digitized intermediate frequency signal (111) using the procedure as claimed in one of the Claims 1 to 6.

9. Distance measuring device as claimed in Claim 8, **characterized by** at least one of the following:

   - the distance measuring device is a level transmitter (200);
   - the distance measuring device is a level transmitter (200), which is designed to determine a level in a vessel or tank (201);
   - the distance measuring device is a field device for use in the field of process automation.

**Revendications**

1. Procédé destiné à la détermination de distances par rapport à des cibles radar (104) en utilisant un radar FMCW, lequel procédé comprend :

- Émission d'un signal d'émission modulé en fréquence (113),
- Réception d'un signal de réception (114) réfléchi par au moins une cible radar (104),
- Conversion du signal de réception (114) en un signal de fréquence intermédiaire (111),
- Transformation (402) du signal de fréquence intermédiaire (111) dans le domaine fréquentiel au moyen d'une transformation de Fourier rapide, un spectre de fréquences (301) étant obtenu en tant que séquence d'échantillons de fréquences (302, 306, 307, 308),
- Détection (403) des pics (304) dans le spectre de fréquences (301), **caractérisé par**

a) Sélection d'au moins trois points adjacents (501, 502, 503, 601, 602, 603, 606) du spectre de fréquences au voisinage d'un pic (500, 600), lesquels points présentent les amplitudes de fréquences les plus élevées déterminées jusqu'ici,

b) Définition d'une parabole d'approximation (604, 607) à travers les au moins trois points (601, 602, 603, 606), et introduction d'une fréquence ($f_{11}$, $f_{12}$) d'un sommet de la parabole d'approximation (604, 607) comme point-repère de fréquence supplémentaire, ou
Introduction de points-repères de fréquence ($f_4$, $f_5$, $f_6$, $f_7$) supplémentaires en subdivisant les intervalles de fréquence ($f_1$, $f_2$, $f_3$) entre les au moins trois points adjacents (501, 502, 503) dans le domaine fréquentiel au voisinage du pic (500),

c) Détermination de l'amplitude de fréquence en au moins un point-repère de fréquence ($f_4$, $f_5$, $f_6$, $f_7$, $f_{11}$, $f_{12}$) supplémentaire en utilisant l'algorithme de Goertzel,

d) Répétition des étapes a) à c) jusqu'à ce qu'une position d'un maximum de pic (309) du pic (500, 600) soit déterminée avec une précision prédéfinie, et

- Conversion (406) de la position du maximum de pic (309) en une distance de la cible radar (104).

2. Procédé selon la revendication 1,
**caractérisé par au moins l'un des éléments suivants** :

- le signal de fréquence intermédiaire (111) comprend une séquence d'échantillons de temps dans le domaine temporel ;
- une transformation de Fourier rapide transforme le signal de fréquence intermédiaire (111) comprenant une séquence d'échantillons de temps (300) dans le domaine temporel en une séquence d'échantillons de fréquence (302, 306, 307, 308) dans le domaine fréquentiel ;
- le signal de fréquence intermédiaire (111) comprend une séquence d'échantillons de temps (300) dans le domaine temporel, une valeur moyenne du signal de fréquence intermédiaire (111) étant déterminée avant d'effectuer la transformation de Fourier rapide, et la valeur moyenne étant soustraite de chacun des échantillons de temps (300) avant d'effectuer la transformation de Fourier rapide ;
- le signal de fréquence intermédiaire (111) comprend une séquence d'échantillons de temps (300) dans le domaine temporel, une section pour la transformation de Fourier rapide étant sélectionnée à partir de la séquence d'échantillons de temps (300) avant que la transformation de Fourier rapide ne soit effectuée ;
- le signal de fréquence intermédiaire (111) comprend une séquence d'échantillons de temps (300) dans le domaine temporel, une section pour la transformation de Fourier rapide étant sélectionnée à partir de la séquence d'échantillons de temps (300) avant que la transformation de Fourier rapide ne soit effectuée, la section comprenant $2^n$ échantillons de temps, n étant un nombre naturel ;
- la transformation de Fourier rapide fournit une trame régulière (303) d'échantillons de fréquence (302, 306, 307, 308) dans le domaine fréquentiel.

3. Procédé selon la revendication 1 ou 2,
**caractérisé par au moins l'un des éléments suivants** :

- pour la détection des pics dans le spectre de fréquence (301), des échantillons de fréquence (302, 306, 307, 308) fournis par la transformation de Fourier rapide sont comparés à une valeur de seuil (305), un pic (304) étant détecté lorsque la valeur de seuil (305) est dépassée ;
- la trame régulière (303) d'échantillons de fréquence (302, 306, 307, 308) fournie par la transformation de Fourier rapide est encore subdivisée au voisinage du pic détecté (304) en introduisant l'au moins un point-repère de fréquence (310) supplémentaire ;
- une résolution de fréquence du spectre de fréquence (301) est améliorée au voisinage du pic détecté (304) en subdivisant encore la trame régulière (303) d'échantillons de fréquence (302, 306, 307, 308) fournie par la transformation de Fourier rapide en introduisant l'au moins un point-repère de fréquence (310) supplémentaire ;

- en introduisant l'au moins un point-repère de fréquence (310) supplémentaire au voisinage du pic détecté (304), une détermination de la position (309) du maximum du pic (304) avec une précision accrue est rendue possible.

4. Procédé selon l'une des revendications 1 à 3,
   **caractérisé par l'étape suivante** :

   - Interpolation de la réponse du pic au voisinage du maximum du pic détecté (304) en utilisant à la fois les échantillons de fréquence et les amplitudes de fréquence à l'au moins un point-repère de fréquence (310) supplémentaire.

5. Procédé selon l'une des revendications 1 à 4,
   **caractérisé en ce que**
   la position du maximum du pic (600) est déterminée sur la base des échantillons de fréquence (601, 602, 603) fournis par la transformation de Fourier rapide au moyen d'une interpolation parabolique selon le procédé de Brent.

6. Procédé selon l'une des revendications 1 à 5,
   **caractérisé par au moins l'un des éléments suivants** :

   - le procédé est utilisé dans un transmetteur de niveau (200) pour déterminer un niveau en utilisant un radar FMCW ;
   - le procédé est utilisé dans le cadre d'une mesure de niveau utilisant un radar FMCW pour déterminer le niveau dans un réservoir ou une cuve (201).

7. Utilisation du procédé selon l'une des revendications 1 à 6 dans un appareil de mesure de niveau (200) fonctionnant selon le principe du radar FMCW pour déterminer un niveau dans un réservoir ou une cuve (201).

8. Appareil de mesure de distance destiné à la détermination de la distance de cibles radar (104) au moyen d'un radar FMCW, lequel appareil comprend :

   - une unité d'émission, laquelle unité émet un signal d'émission radar (113),
   - une unité de réception, laquelle unité reçoit un signal de réception radar (114) réfléchi par au moins une cible radar (104), convertit le signal de réception radar en une gamme de fréquence intermédiaire et numérise un signal de fréquence intermédiaire résultant (109)
   **caractérisé par**
   - une unité d'exploitation (112), laquelle unité est conçue pour déterminer une position d'un maximum de pic (309) d'au moins une composante fréquentielle incluse dans le signal de fréquence intermédiaire numérisé (111) au moyen du procédé selon l'une des revendications 1 à 6.

9. Appareil de mesure de distance selon la revendication 8, **caractérisé par** au moins l'un des éléments suivants :

   - l'appareil de mesure de distance est un transmetteur de niveau (200) ;
   - l'appareil de mesure de distance est un transmetteur de niveau (200) conçu pour déterminer un niveau dans un réservoir ou une cuve (201) ;
   - l'appareil de mesure de distance est un appareil de terrain destiné à être utilisé dans le domaine de l'automatisation des process.

Fig. 1A

Fig. 1B

EP 2 997 336 B1

Fig.2

Fig. 3A

Fig. 3B

Fig. 4

Fig.5

Fig.6

Fig. 7

EP 2 997 336 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KONFERENZBAND.** Third International Conference on Computer and Communication Technology. IEE, 2012, 221-226
- **W. PRESS et al.** Numerical Recepies in C. 1992, 402 ff
- A fixed IF 77GHz- FMCW radar-sensor'' zur ''MICRO-WAVE CONFERENCE. ASIA-PACIFIC. IEEE, 2008
- Numerical Recipes in C: the Art of Scientific Computing. William H. Press, 1992